# EUROPEAN PATENT SPECIFICATION

(11) **EP 4 083 909 B1**
(45) Date of publication and mention of the grant of the patent: **25.11.2026**
(21) Application number: 20907077.0
(22) Date of filing: 28.07.2020
(51) Int. Cl.: G06T 7/00, G06N 20/00, G06V 10/774, G06V 10/778, G06V 20/52, G06V 10/25, G06V 40/20

(54) **IDENTIFICATION INFORMATION ADDITION DEVICE, IDENTIFICATION INFORMATION ADDITION METHOD, AND PROGRAM**
VORRICHTUNG ZUR HINZUFÜGUNG VON IDENTIFIZIERUNGSINFORMATIONEN, VERFAHREN ZUR HINZUFÜGUNG VON IDENTIFIZIERUNGSINFORMATIONEN UND PROGRAMM
DISPOSITIF D'AJOUT D'INFORMATIONS D'IDENTIFICATION, PROCÉDÉ D'AJOUT D'INFORMATIONS D'IDENTIFICATION, ET PROGRAMME

(30) Priority: 23.12.2019 JP 2019231757
(43) Date of publication of application: 02.11.2022
(73) Proprietor: Panasonic Intellectual Property Management Co., Ltd., Osaka-shi, Osaka 540-6207 (JP)
(72) Inventor: ITOH, Tomoaki, Osaka-shi, Osaka 540-6207 (JP); SHIN, Hidehiko, Osaka-shi, Osaka 540-6207 (JP); ICHIMURA, Daijiroh, Osaka-shi, Osaka 540-6207 (JP); MIYATA, Atsushi, Osaka-shi, Osaka 540-6207 (JP); OKIMOTO, Yoshiyuki, Osaka-shi, Osaka 540-6207 (JP); TANAKA, Akihiro, Osaka-shi, Osaka 540-6207 (JP); MIZUSHIMA, Kaito, Osaka-shi, Osaka 540-6207 (JP)
(74) Representative: Eisenführ Speiser
(86) International application number: PCT/JP2020/028895
(87) International publication number: WO 2021/131127

(56) References cited:
- JP-A- 2012 042 990
- JP-A- H06 244 747
- AGHDAM HAMED H ET AL: "Active Learning for Deep Detection Neural Networks", 2019 IEEE/CVF INTERNATIONAL CONFERENCE ON COMPUTER VISION (ICCV), IEEE, 27 October 2019 (2019-10-27), pages 3671 - 3679, XP033723503, DOI: 10.1109/ICCV.2019.00377
- PARK RYAN: "My own thief detector using CNN", 29 October 2018 (2018-10-29), pages 1 - 7, XP093047053, Retrieved from the Internet <URL:https://www.linkedin.com/pulse/my-own-thief-detector-using-cnn-ryan-park-cpa-cga> [retrieved on 20230515]
- SHIN HIDEHIKO , ITOH TOMOAKI , ADACHI TAKAO , KANEKO YUKI: "On-site Cyber Physical System Technology", PANASONIC TECHNICAL JOURNAL, vol. 65, no. 1, May 2019 (2019-05-01), Japan, pages 9 - 14, XP009533931, ISSN: 1883-115X

## Description

### TECHNICAL FIELD

The present disclosure relates to an identification information assignment device, an identification information assignment method, and a program that assign identification information to data used in machine learning.

### BACKGROUND ART

In the paper "Active Learning for Deep Detection Neural Networks" by H.H. Adhdam et al. (2019 IEEE/CVF International Conference on Computer Vision (ICCV), IEEE, 27 October 2019 (2019-10-27), pages 3671-3679) a method to perform active learning of object detectors based on convolutional neural networks is proposed. The authors propose an image-level scoring process to rank unlabeled images for their automatic selection. The proposed method can be applied to videos and sets of still images. In the former case, temporal selection rules can complement the scoring process.

In recent years, machine learning has been used in various fields. In machine learning, an amount of learning data is important, and a highly accurate result can be obtained by performing learning with a large amount of learning data. At this time, information related to data is to be assigned in advance. Such work is called annotation, and for example, in a case where a person is shown in photograph data, position information of a region where the person exists in the photograph data, information such as a category of "person", or the like is assigned.

Since the amount of learning data is enormous, it takes a lot of labor and time to manually perform the annotation. Patent Document 1 discloses a technique of reducing manual work. Patent Document 1 discloses a technique of manually generating reference data first and generating learning data using the reference data.

### PRIOR ART DOCUMENT

### PATENT DOCUMENT

Patent Document 1: JP 2018-200531 A

### SUMMARY OF Invention

The invention is defined by the set of appended claims.

### PROBLEM TO BE SOLVED

The present disclosure provides an identification information assignment device, an identification information assignment method, and a program capable of selecting learning data that is effective for learning a learning model.

### MEANS FOR SOLVING PROBLEM

An identification information assignment device according to the present disclosure is defined in claim 1.

These general and specific aspects may be implemented by a system, a method, a computer program, and a combination thereof.

### EFFECT OF THE INVENTION

An identification information assignment device, an identification information assignment method, and a program according to the present disclosure make it possible to select learning data that is effective for learning a learning model when machine learning is used.

### BRIEF DESCRIPTION OF DRAWINGS

[Fig.1] Fig. 1 is a block diagram illustrating a configuration of a flow line analysis system including an identification information assignment device according to a first embodiment.
[Fig.2] Fig. 2 is a block diagram illustrating a configuration of the identification information assignment device according to the first embodiment.
[Fig.3] Fig. 3 is an explanatory diagram of a series of image data that assigns identification information in the identification information assignment device.
[Fig.4] Fig. 4 is an explanatory diagram of selection of image data for a first annotation in the identification information assignment device.
[Fig.5] Fig. 5 is an example of identification information assigned to the image data in the identification information assignment device according to the first embodiment.
[Fig.6] Fig. 6 is a flowchart illustrating processing of assigning identification information and updating a learning model according to the first embodiment.
[Fig.7] Fig. 7 is a block diagram illustrating a configuration of an identification information assignment device according to a second embodiment.
[Fig.8] Fig. 8 is an explanatory diagram of condition data used in the identification information assignment device according to the second embodiment.
[Fig.9] Fig. 9 is an explanatory diagram of condition data used in the identification information assignment device according to the second embodiment.
[Fig.10] Fig. 10 is a flowchart illustrating processing of assigning identification information and updating a learning model according to the second embodiment.
[Fig.11] Fig. 11 is a block diagram illustrating a configuration of an identification information assignment device according to a third embodiment.
[Fig.12] Fig. 12 is an explanatory diagram comparing detection data and temporary identification information in the identification information assignment device according to the third embodiment.
[Fig.13] Fig. 13 is a flowchart illustrating processing of assigning identification information and updating a learning model according to the third embodiment.
[Fig.14] Fig. 14 is a block diagram illustrating a configuration of an identification information assignment device according to a fourth embodiment.
[Fig.15] Fig. 15 is a flowchart illustrating processing of assigning identification information and updating a learning model according to the fourth embodiment.

### DETAILED DESCRIPTION

### [Knowledge underlying present disclosure]

In recent years, machine learning has been used in a wide variety of fields. In addition, with a progress of arithmetic units such as a high-speed graphics processing unit (GPU) server, a processing speed of image data has been also improved. As a result, by analyzing information using moving image data using machine learning or the like, it is possible to specifically analyze contents that have been difficult to analyze only by humans. For example, even in an examination and analysis of movement of a dynamic body such as a person or an object in various places such as a factory, a warehouse, a store, and an office, use of machine learning enables highly accurate analysis that has been difficult only by human analysis using a large amount of data.

Incidentally, in a case where the machine learning is used in this manner, generation of learning data greatly affects generation of a learning model. For example, when a learning model is generated using image data selected from a plurality of pieces of image data, learning efficiency depends on selection of image data to be used as learning data. However, it has been difficult to efficiently select image data to be used for generation of a learning model from a large amount of image data.

The present disclosure provides an identification information assignment device, an identification information assignment method, and a program that select image data enabling effective learning in machine learning and efficiently assign identification information to the image data. It is therefore possible to generate learning data from which a highly accurate result can be obtained.

### [Embodiments]

Hereinafter, embodiments of the present disclosure will be described with reference to the drawings. In the detailed description, unnecessary parts in the description of the conventional technique and the substantially same configuration may be omitted. This is to simplify the description. Further, the following description and the accompanying drawings are disclosed such that those skilled in the art can fully understand the present disclosure, and are not intended to limit the gist of the claims.

The identification information assignment device, the identification information assignment method, and the program of the present disclosure automatically assign identification information when generating learning data of machine learning. Hereinafter, an example will be described in which learning data used for flow line analysis of a dynamic body in a target space is extended in the identification information assignment device.

In the following description, the "learning model" will be described on the assumption that identification information is assigned to image data.

The "identification information" is information such as a tag and metadata assigned to image data serving as learning data for machine learning. Further, "assignment of identification information" is assignment of a tag or metadata to image data, and is synonymous with "annotation".

The "flow line" refers to a path or a track along which a dynamic body such as a person or an object moves. The "dynamic body" is a person, an object, or the like, which is a target of flow line analysis. The "object" is, for example, a cart moved by a person. The "flow line analysis" is to record flow lines of a person or an object and analyze and output the flow lines as statistical data.

Hereinafter, an example will be described in which the identification information assignment device assigns identification information related to a dynamic body included in an image to image data including the dynamic body in order to use the image data as learning data of machine learning.

### <First embodiment>

### <Flow line analysis system>

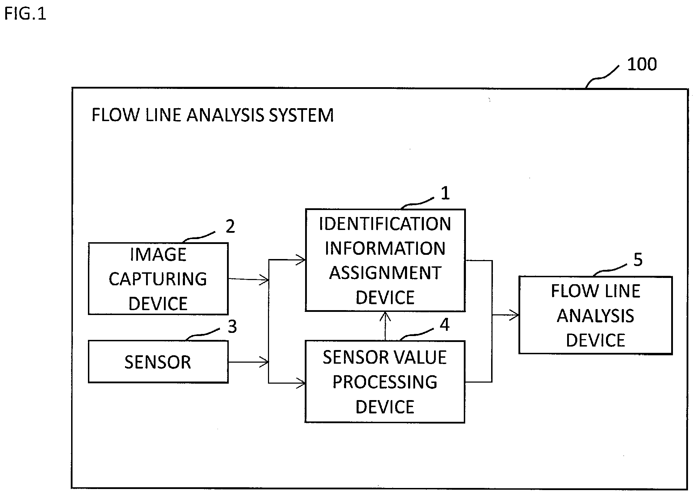

As illustrated in Fig. 1, an identification information assignment device 1 according to a first embodiment is used, for example, in a flow line analysis system 100 that analyzes movement of a person or the like. The flow line analysis system 100 includes an image capturing device 2, a sensor 3, a sensor value processing device 4, and a flow line analysis device 5 together with the identification information assignment device 1.

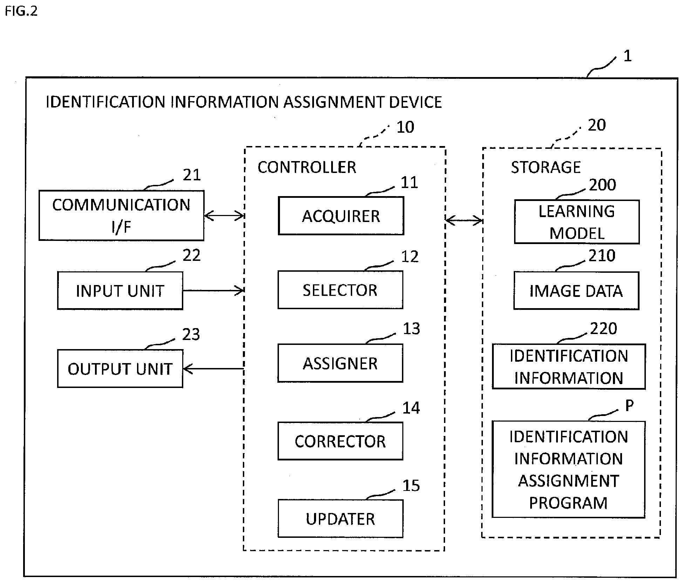

The identification information assignment device 1 assigns identification information to image data captured by the image capturing device 2. A specific configuration of the identification information assignment device 1, processing in the identification information assignment device 1, and the like will be described later with reference to Figs. 2 to 6.

The image capturing device 2 is a camera that captures a space as a target of the flow line analysis. The image capturing device 2 does not have to capture a moving image, but the image capturing device 2 is to be capable of capturing images of a plurality of continuous frames because the flow line analysis system 100 analyzes movement of a dynamic body such as a person. Although only one image capturing device 2 is illustrated in Fig. 1, the flow line analysis system 100 may include a plurality of image capturing devices 2 because an entire target space is preferably captured. In the flow line analysis system 100, image data simultaneously captured by the plurality of image capturing devices 2 can be combined into one piece of image data and used. For example, even when one image capturing device 2 cannot capture the entire space as a target of the flow line analysis due to the limitation of a capturing range, it is possible to obtain image data in a wide range by combining images captured by the plurality of image capturing devices 2. Note that, in the following description, the image data captured at one timing will be described as one piece or already combined, and combining processing will not be described here.

The sensor 3 is, for example, a human sensor that detects presence of a person, using infrared rays or ultrasonic waves. Further, the sensor 3 may be a sound sensor that detects movement of a person or the like by inputting sound. The sensor 3 may receive a radio wave transmitted from a transmitter provided on a person, an object, or the like. Although only one sensor 3 is illustrated in Fig. 1, the flow line analysis system 100 may include a plurality of sensors 3 or a plurality of types of sensors. In the flow line analysis, using a detection result by the sensor 3 can improve accuracy of detection of a dynamic body as compared with a case where a dynamic body is detected only from image data. For example, position information obtained from the sensor 3 can be utilized together with the image data, and can be used to determine whether the target of which image data is assigned with the identification information is a cart. Specifically, this is because, in a case where a transmitter is installed as the sensor 3 in the cart, where the cart is included in the image data can be accurately determined by the radio wave of the sensor 3.

The sensor value processing device 4 processes a sensor value obtained by the sensor 3 and generates information related to a dynamic body in a target space as sensor value data.

The flow line analysis device 5 generates flow line analysis data of a person or the like in a target space by using the image data generated with identification information assigned by the identification information assignment device 1, the sensor value data processed by the sensor value processing device 4. Using the generated flow line analysis data makes it possible to effectively arrange objects and improve work contents in the target space.

### <Identification information assignment devices

Next, the identification information assignment device 1 will be described. As illustrated in Fig. 2, the identification information assignment device 1 is an information processor including a controller 10, a storage 20, a communication interface (I/F) 21, an input unit 22, an output unit 23, and the like.

The controller 10 is a controller that controls the entire identification information assignment device 1. For example, the controller 10 reads and executes an identification information assignment program P stored in the storage 20, and thus executes processing as an acquirer 11, a selector 12, an assigner 13, a corrector 14, and an updater 15. Further, the controller 10 is not limited to a controller that implements a predetermined function in coordination with hardware and software, and may be a hardware circuit designed exclusively for implementing a predetermined function. That is, the controller 10 can be achieved by various processors such as a central processing unit (CPU), a micro processing unit (MPU), a GPU, a field-programmable gate array (FPGA), a digital signal processor (DSP), and an application specific integrated circuit (ASIC).

The storage 20 is a recording medium that records various types of information. The storage 20 is achieved by, for example, a random access memory (RAM), a read only memory (ROM), a flash memory, a solid state device (SSD), a hard disk, other storage devices, or an appropriate combination thereof. In addition to the identification information assignment program P executed by the controller 10, the storage 20 stores information to be used for the identification information, various information acquired for assigning the identification information, and the like. For example, the storage 20 stores a learning model 200, image data 210, and identification information 220.

The communication I/F 21 is an interface circuit (module) for enabling data communication with an external device (not illustrated). The input unit 22 is an input device such as an operation button, a keyboard, a mouse, a touch screen, and a microphone used for operation and data input. The output unit 23 is an output device such as a display or a speaker used for outputting a processing result or data.

Note that the identification information assignment device 1 may be achieved by a plurality of information processors. Further, a part of data stored in the storage 20 may be stored in an external storage, and may be read from the external storage and used. For example, it is sufficient that the identification information assignment device 1 is able to use the learning model 200, and the identification information assignment device 1 may be configured to read the learning model 200 from an external server or the like for use.

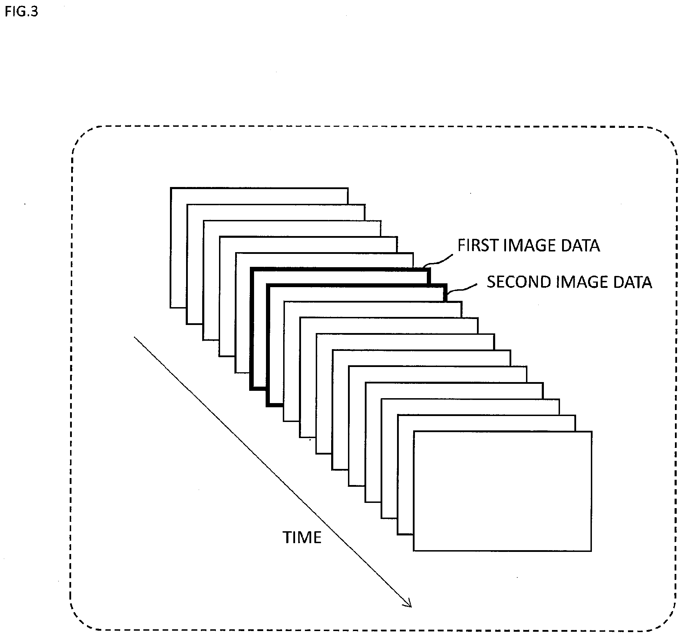

The acquirer 11 acquires a plurality of pieces of continuous image data 210 captured by the image capturing device 2. Further, the acquirer 11 stores the acquired image data 210 in the storage 20. For example, each piece of image data 210 is each frame of moving image data as illustrated in Fig. 3. In the following description, certain image data will be referred to as "first image data", and image data captured continuously with the first image data will be referred to as "second image data" as necessary.

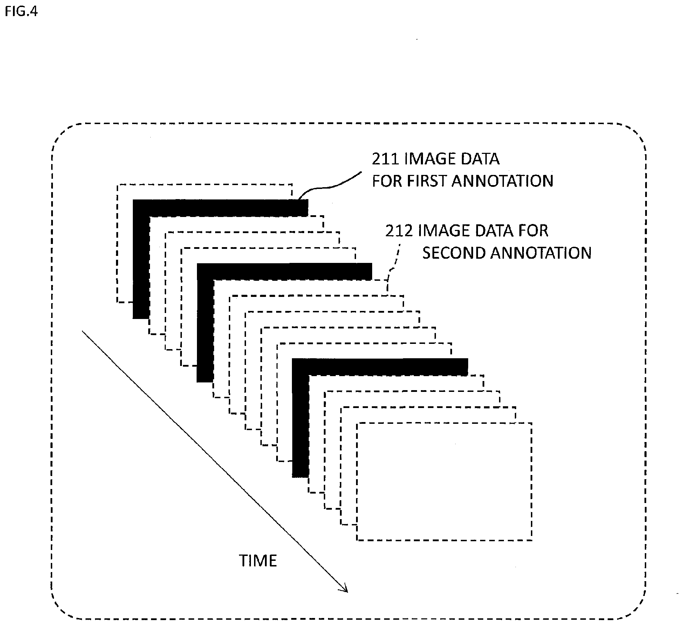

The selector 12 selects a part of all the pieces of image data 210 from the plurality of pieces of image data 210 as learning data. Hereinafter, as illustrated in Fig. 4, the image data 210 selected by the selector 12 will be described as "image data for a first annotation" (image data indicated in black) as necessary. The image data 210 not selected by the selector 12 will be described as "image data for a second annotation" (image data indicated by broken line) as necessary. Specifically, the selector 12 randomly selects image data 211 for the first annotation as learning data from the plurality of pieces of image data 210.

The assigner 13 assigns the identification information 220 to the image data 210 by using the learning model 200. Further, the assigner 13 stores the assigned identification information 220 in the storage 20 in association with the image data 210. Specifically, the assigner 13 assigns the identification information 220 to the image data 211 for the first annotation selected by the selector 12 by using the learning model 200 after learning. The learning model 200 has learned the image data and the identification information included in the image data. It is assumed that the learning model 200 includes, for example, a general-purpose learning model having insufficient identification accuracy. When the learning model 200 is updated later, the assigner 13 assigns the identification information to the rest of the image data 210 acquired by the acquirer 11, specifically, the image data 212 for the second annotation, using the updated learning model 200.

The corrector 14 displays the image data 211 for the first annotation and the identification information 220 assigned to the image data 211 for the first annotation by the assigner 13 on the output unit 23, and receives a request for correcting the identification information 220. The corrector 14 corrects the identification information 220 in accordance with the request.

The updater 15 updates the learning model 200 using the image data 210 to which the identification information 220 is assigned. Specifically, when the plurality of pieces of image data 210 and the identification information 220 as correct data corresponding to each piece of image data 210 are input as learning data, the updater 15 learns a relationship between the image data 210 and the identification information 220 by machine learning using a learning tool. As a result, the updater 15 updates the learning model 200 that introduces the identification information to the input image data 210. The learning tool used by the updater 15 may be inside or outside the identification information assignment device 1. At this time, the learning tool can relearn the learning model 200 stored in the storage 20 and generate a new learning model 200. By being updated by the updater 15, the learning model 200 stored in the storage 20 becomes an updated new learning model 200. Note that when the identification information 220 has been corrected by the corrector 14, the updater 15 updates the learning model 200 using the corrected identification information 220 and the corresponding image data 210.

### <<Selection of image data by selector>>

As described above, the selector 12 randomly selects the image data 211 for the first annotation. For example, the selector 12 randomly selects a number of pieces of image data 210 corresponding to a predetermined proportion among all the image data 210 as the image data 211 for the first annotation. A specific method of randomly selecting the image data 210 is not limited. For example, there is a method of randomly assigning numbers as index values to all the continuous image data 210 and selecting a number of image data 210 corresponding to a predetermined proportion in descending order or ascending order of the index values. The index values are values used as index for selecting the image data 211 for the first annotation.

For example, in the plurality of pieces of continuous image data 210 constituting the moving image data as illustrated in Fig. 4, pieces of image data 210 approximate in time series tend to be similar to each other. The learning model 200 can obtain an efficient learning result by using the randomly selected image data 210 as the learning data rather than learning the plurality pieces of similar image data 210 as the learning data. Therefore, as illustrated in the example in Fig. 4, the selector 12 randomly selects the image data 211 for the first annotation.

### <<Assignment of image data by assigner>>

### (First annotation processing)

The assigner 13 assigns the identification information 220 to the selected image data 211 for the first annotation by using the learning model 200 stored in the storage 20 in advance. Examples of the identification information 220 include information in which "coordinates" from which a target is extracted in the image data 210, a "width" that is a length in an x-axis direction, a "height" that is a length in a y-axis direction of a region extracted as the target, a "class" for specifying a type of the target, and the like are associated. The "class" for specifying the type of the target is, for example, information for specifying whether the target of flow line extraction is a "person" or a "cart". Note that the image data 210 may include a plurality of targets, and thus a plurality of regions may be extracted from one piece of image data 210, and a plurality of pieces of identification information may be assigned. Further, the assigner 13 stores the identification information in the storage 20 in association with the image data 210.

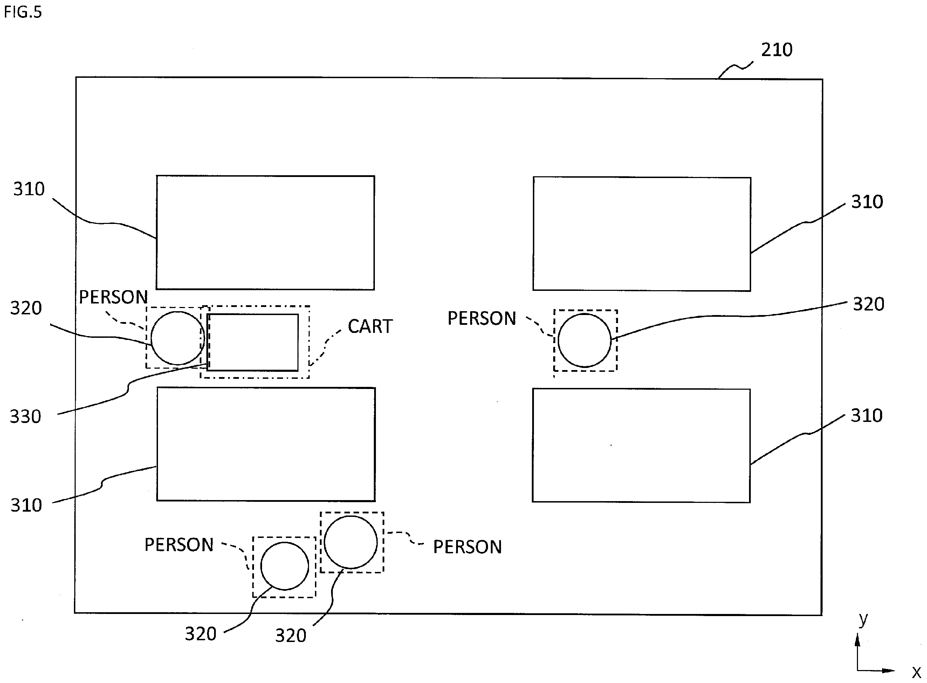

For example, as illustrated in Fig. 5, the assigner 13 assigns a plurality of pieces of identification information to the image data 211 for the first annotation. Image data 210 illustrated in Fig. 5 is, for example, data of a space including a plurality of obstacles 310. Specifically, the assigner 13 selects a region of an identification target from the image data 210, and assigns identification information of the identification target included in the selected region. The example illustrated in Fig. 5 is an example in which the assigner 13 assigns the identification information of "person" to the region (rectangle of broken line) of a person 320 and assigns the identification information of "cart" to the region (rectangle of one-dot chain line) of a cart 330. In the example illustrated in Fig. 5, the region of the person 320 is indicated by a rectangle of a broken line, and the region of the cart is indicated by a rectangle of a one-dot chain line, which are examples for distinction in the drawing. Further, when the identification targets are close to each other as in the example in which the regions of "person" and "cart" overlap each other in Fig. 5, a plurality of identification target regions may overlap each other. Note that information such as coordinates for specifying positions of the obstacles 310 can be stored in the storage 20 in advance.

### (Second annotation processing)

After the first annotation, the assigner 13 assigns the identification information to the image data 212 for the second annotation as the rest of the image data by using the updated learning model 200. The assignment of the identification information to the image data 212 for the second annotation is the same as the first annotation processing, and thus will not be described here.

### <Processing of assigning identification information and updating learning model>

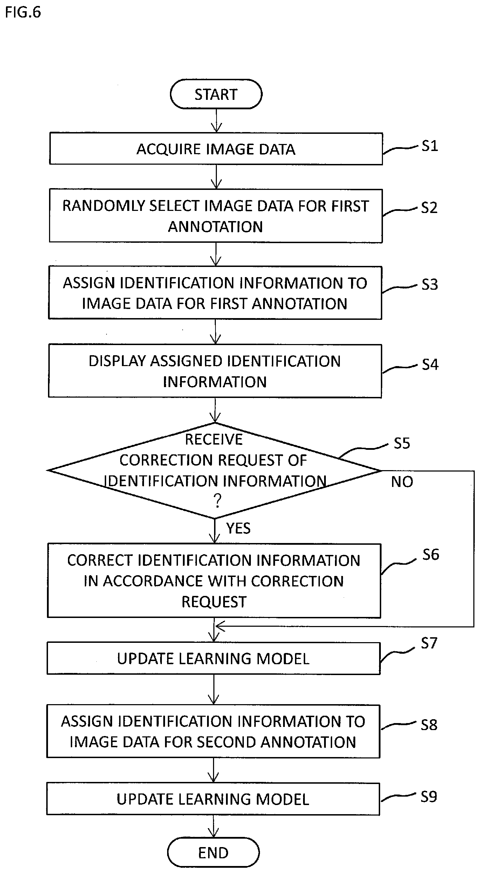

Next, a series of processing of assignment of the identification information 220 performed by the identification information assignment device 1 and the subsequent update of the learning model 200 will be described with reference to a flowchart illustrated in Fig. 6.

The acquirer 11 acquires the image data 210 captured by the image capturing device 2 (S1) . The image data 210 is the image data 210 of a plurality of continuous frames. At this time, the acquirer 11 stores the acquired image data 210 in the storage 20 in association with time of capturing the image.

The selector 12 randomly selects the image data 211 for the first annotation from the image data 210 acquired in step S1 (S2). Among the plurality of pieces of image data 210 acquired in step S1, the image data 210 that has not been selected in step S2 is the image data 212 for the second annotation.

The assigner 13 executes the first annotation processing of assigning the identification information 220 to the image data 211 for the first annotation selected in step S2 using the learning model 200 stored in the storage 20 (S3). Further, the assigner 13 stores the identification information 220 in the storage 20 in association with the image data 210.

In order to receive the correction of the identification information 220 assigned in step S3, the corrector 14 displays the image data 211 for the first annotation and the corresponding identification information 220 on the output unit 23 (S4). For example, the corrector 14 may display the image as described above with reference to Fig. 5.

When receiving a correction request of the identification information 220 via the input unit 22 (YES in S5), the corrector 14 corrects the identification information 220 in accordance with the correction request and has the correction reflected to the storage 20 (S6).

When the correction request is not received in step S5, or after the correction is completed in step S6, the updater 15 executes learning processing using each piece of the image data 211 for the first annotation and the identification information 220 and updates the learning model 200 (S7).

The assigner 13 executes the second annotation processing using the learning model 200 updated in step S7, and assigns the identification information 220 to each piece of the image data 212 for the second annotation (S8). Further, the assigner 13 stores the identification information 220 in the storage 20 in association with the image data 210.

Subsequently, the updater 15 executes the learning processing using each piece of the image data 212 for the second annotation and the identification information 220 and updates the learning model 200 stored in the storage 20 (S9).

As described above, the identification information assignment device 1 can select the useful learning data in a well-balanced manner by randomly selecting the image data 211 for the first annotation from the plurality of continuous pieces of image data 210, and can prevent the similar image data 210 from being used as the learning data. By using the image data 211 for the first annotation selected in this manner, efficient learning can be performed, and a useful learning model 200 can be generated. Thereafter, the identification information assignment device 1 generates the learning model 200 using the image data 211 for the first annotation useful as the learning data. The identification information assignment device 1 further assigns the identification information 220 to the image data 212 for the second annotation serving as the learning data using the generated learning model 200, and updates the learning model 200. As a result, the identification information assignment device 1 enables efficient learning.

### <Second embodiment>

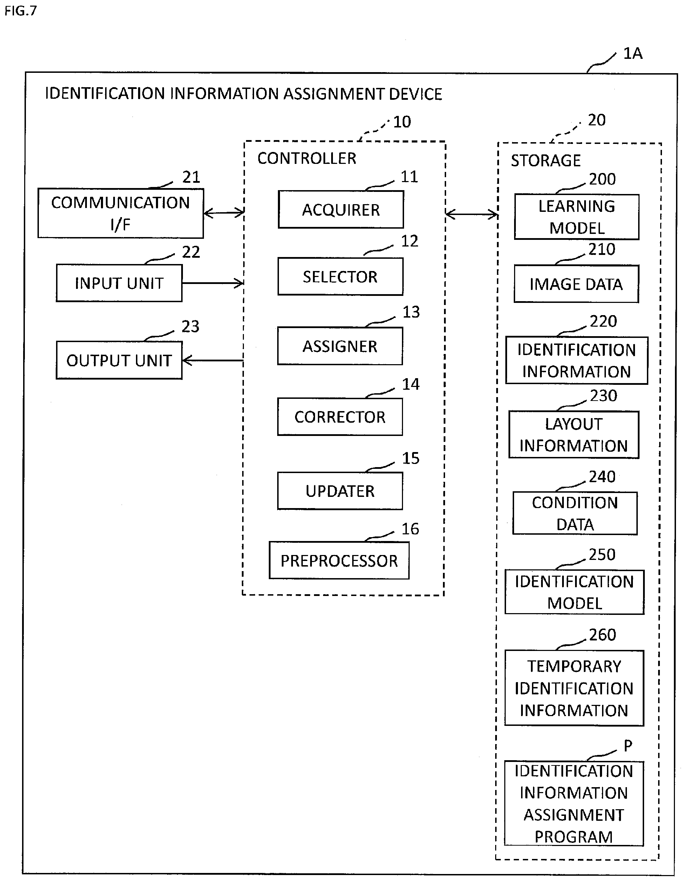

An identification information assignment device 1A according to a second embodiment will be described with reference to Fig. 7. The identification information assignment device 1 described above with reference to Figs. 1 to 6 randomly selects the image data 211 for the first annotation from all the image data 210. In the second embodiment, the identification information assignment device 1A uses layout information 230 and condition data 240 registered in advance in the storage 20, and temporary identification information 260 that is identification information temporarily assigned using an existing identification model 250 that implements an identifier. Hereinafter, as illustrated in Fig. 7, the identification information assignment device 1A is different from the identification information assignment device 1 described above with reference to Fig. 2 in that the identification information assignment device 1A includes a preprocessor 16 and stores the layout information 230, the condition data 240, the identification model 250, and the temporary identification information 260 in the storage 20.

The layout information 230 is information related to a layout of a space, and includes coordinate information related to a position of a doorway to the space, a position where a dynamic body such as a person can freely move in the space, a position of an obstacle that hinders movement of the dynamic body in the space, and the like.

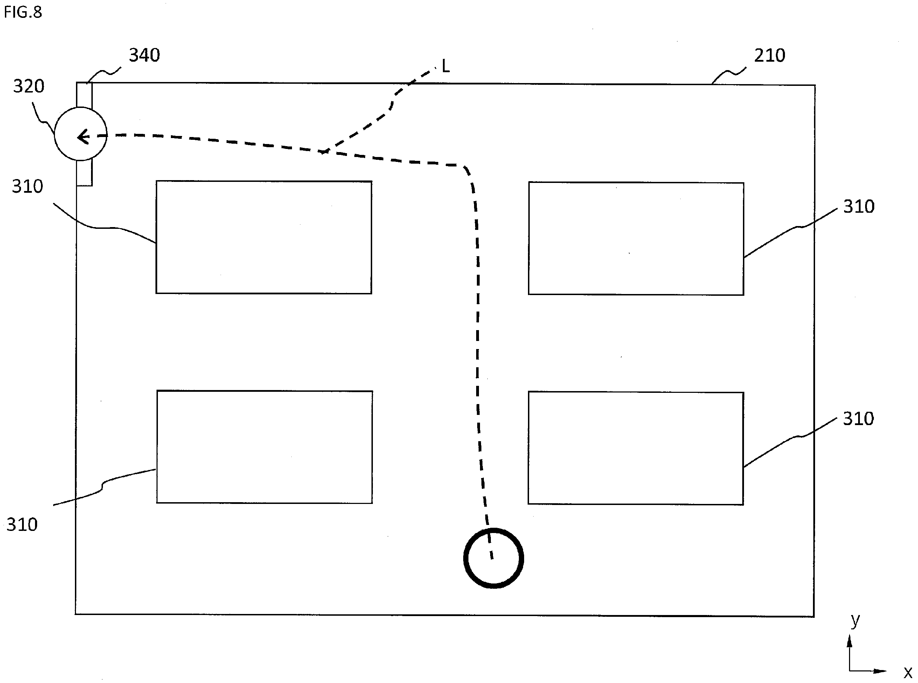

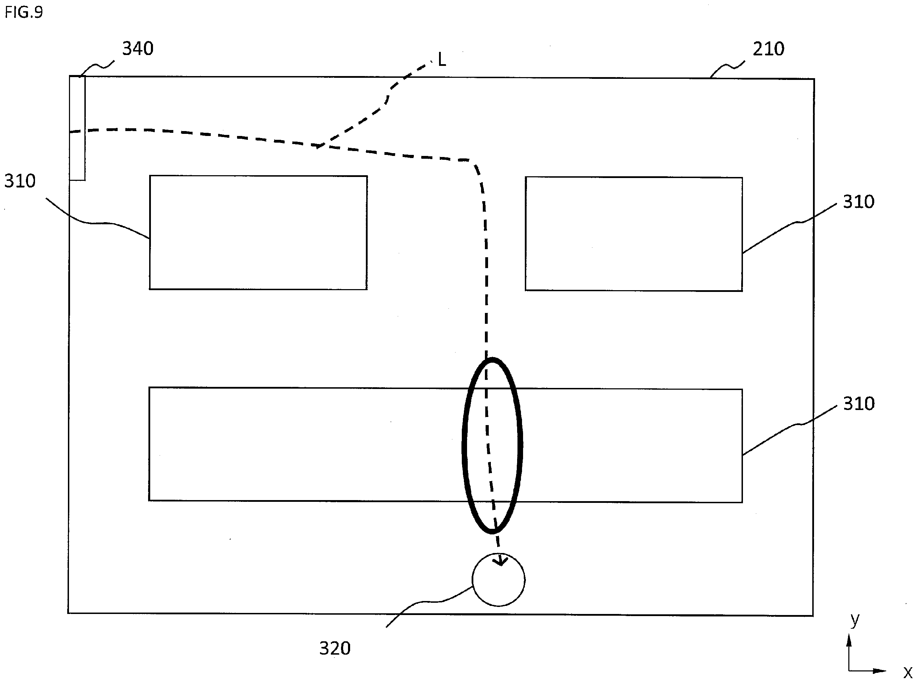

The condition data 240 is a condition defined as being inappropriate as a flow line. The condition defined by the condition data 240 will be described later with reference to Figs. 8 and 9.

The identification model 250 is, for example, a general-purpose identification model capable of assigning identification information to the image data 210, and can assign identification information to the image data 210. However, the identification model 250 does not need to have high identification accuracy. Therefore, the identification information assigned by the identification model 250 may have low reliability.

The temporary identification information 260 is identification information temporarily assigned to each piece of the acquired image data 210 by the identification model 250 as data preprocessing.

The preprocessor 16 assigns the temporary identification information 260 as temporary identification information using the identification model 250 to all the plurality of pieces of image data 210. Further, the preprocessor 16 stores the temporary identification information 260 in the storage 20 in association with the image data 210. Here, a flow line that is a track of each dynamic body is configured by connecting a plurality of pieces of temporary identification information 260 specified by the continuous image data 210 in time series for each dynamic body. As a result, the selector 12 can use the flow line specified on the basis of the temporary identification information 260 in this manner for selecting the image data 211 for the first annotation. For example, when the flow line starts at a position where the flow line should not start, it can be regarded as an error having occurred in detection of a dynamic body as the temporary identification information 260.

The selector 12 compares the identification information 220 assigned to the image data 210 with the layout information 230 of the target space from the flow line specified on the basis of the plurality of pieces of image data 210 to which the temporary identification information 260 is assigned by the preprocessor 16, and selects the image data 211 for the first annotation using whether the condition defined by the condition data 240 determined in advance is satisfied. For example, when a change from the position specified by the temporary identification information 260 of first image data 210 to the position specified by the temporary identification information 260 of second image data as the image data captured continuously with the first image data 210 satisfies a condition to be determined as inappropriate as compared with the layout information 230 of the target space, the selector 12 selects the second image data 210 as the image data 211 for the first annotation. For example, the selector 12 may set different index values for the image data 210 satisfying the condition to be determined as inappropriate and the image data 210 not satisfying the condition, and select the image data 211 for the first annotation in accordance with the set index value.

It is possible to specify whether the flow line of the dynamic body specified by the temporary identification information 260 corresponding to the plurality of pieces of image data 210 is appropriate as the flow line from the layout information 230. Specifically, a possible movement range that can be a flow line can be specified from the layout information 230. Further, it is possible to specify an appropriate movement as a flow line from the identification information 220 of the continuous image data 210. Therefore, the identification information assignment device 1A sets in advance the condition inappropriate for the flow line as described above as the condition data 240. Examples of the inappropriate conditions include the following conditions.

### (1) Movement starting or ending at place other than doorway

When a dynamic body moves in a specific space, the movement starts or ends at a doorway. In other words, a movement that starts or ends at a place other than the doorway cannot occur. Thus, as illustrated in Fig. 8, it is considered that a flow line L starting at a place other than a doorway 340 has occurred due to an error such as an error in assignment of identification information. In a similar manner, it is considered that a flow line ending at a place other than the doorway 340 has also occurred due to an error such as an error in assignment of identification information. Such a condition for starting or ending at a place other than the doorway is determined to be inappropriate in advance as the condition data 240, and registered in the storage 20. For example, in the condition data 240, it is defined as inappropriate in a case where the movement of the dynamic body defined using the temporary identification information 260 is started or ended at a location other than the coordinates specifying the doorway 340.

### (2) Movement ignoring obstacle

The movement of the dynamic body avoids an obstacle or the like. Specifically, for example, when the space is a store, the dynamic body moves while avoiding obstacles such as a table and a shelf. When the space is a factory, similarly, the dynamic body moves while avoiding obstacles such as a shelf, a work table, and a machine. Thus, the flow line L moving on the obstacle 310 as illustrated in Fig. 9 cannot occur. It is considered that the flow line L ignoring the obstacle 310 has also occurred due to an error such as an error in assignment of identification information. The identification information assignment device 1A determines in advance such a condition as inappropriate and registers the condition in the storage 20. For example, in the condition data 240, it is defined as inappropriate in a case where the position of the dynamic body defined using the temporary identification information 260 exists at a location other than the coordinates specified as movable.

Note that, in the plurality of pieces of image data 210 constituting the moving image data, it is considered that a period in which the position of the dynamic body exists at a location other than the region defined as movable may continue for a certain period. When all the pieces of such continuous image data 210 are selected, all the pieces of image data 210 in a certain period are selected, and the number of pieces of similar image data 211 for the first annotation increases. It is therefore necessary to prevent all the continuous image data 210 from being selected. For example, in a case where the selector 12 selects the image data 210 as the image data 211 for the first annotation, the selector does not set the image data 210 of the subsequent predetermined period as a selection target. This can prevent the selector 12 from selecting a plurality of pieces of similar image data 210.

The condition data 240 is for detecting the image data 210 in which an error such as an error in assignment of the temporary identification information 260 has occurred. Therefore, by using the image data 210 detected using the condition data 240 as learning data, it is possible to generate the learning model 200 with high identification accuracy that enables learning using the image data 210 in which an error in assignment of the temporary identification information 260 has occurred and can prevent an error in assignment of the identification information.

### <Processing of assigning identification information and updating learning model>

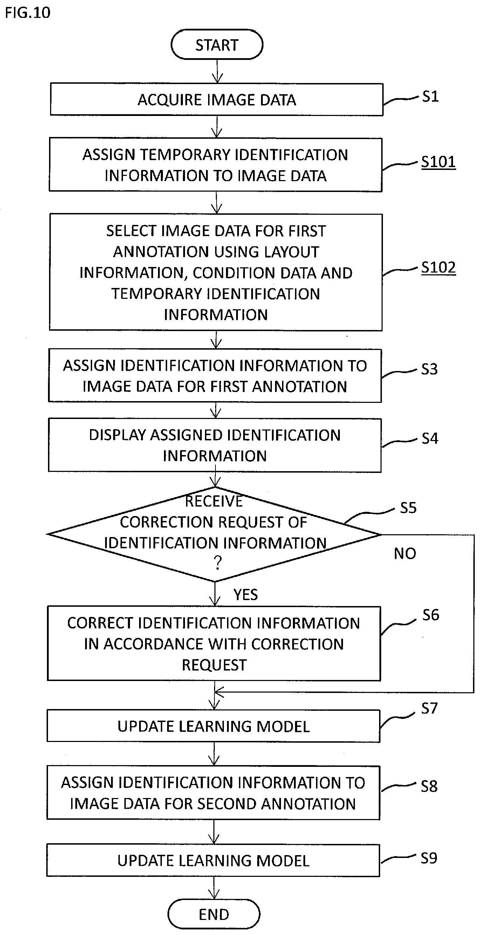

A series of processing of assignment of the identification information 220 performed by the identification information assignment device 1A and the subsequent update of the learning model 200 will be described with reference to Fig. 10. Here, the same processing as the processing described above with reference to Fig. 6 is denoted by the same processing number, and will not be described. Note that, in a flowchart in Fig. 10, processing numbers for processing different from the flowchart in Fig. 6 are underlined.

The preprocessor 16 assigns the temporary identification information 260 to each piece of image data 210 acquired by the acquirer 11 in step S1 by using the identification model 250 (S101). At this time, the preprocessor 16 stores the temporary identification information 260 in association with the corresponding image data 210 in the storage 20.

The selector 12 selects the image data 211 for the first annotation using the layout information 230 and the condition data 240 stored in the storage 20 and the temporary identification information 260 assigned by the image data 210 in step S101 (S102).

In the subsequent processing, similarly to the case described above with reference to Fig. 6, the identification information is assigned to the image data 211 for the first annotation selected in step S102 using the learning model 200 (S3), and the processing in steps S4 to S9 is executed.

As described above, the identification information assignment device 1A determines the appropriateness or inappropriateness of the temporary identification information 260 temporarily assigned using the layout information 230 of the space from the plurality of pieces of continuous image data 210 obtained by capturing the space as a target of the flow line analysis, and selects the image data 211 for the first annotation using a determination result. As a result, the identification information assignment device 1A can select the image data 210 to which the identification information 220 is difficult to automatically assign as the image data 211 for the first annotation. Therefore, the identification information assignment device 1A enables selection of useful learning data, enables efficient learning, and can generate the useful learning model 200.

### <Third embodiment>

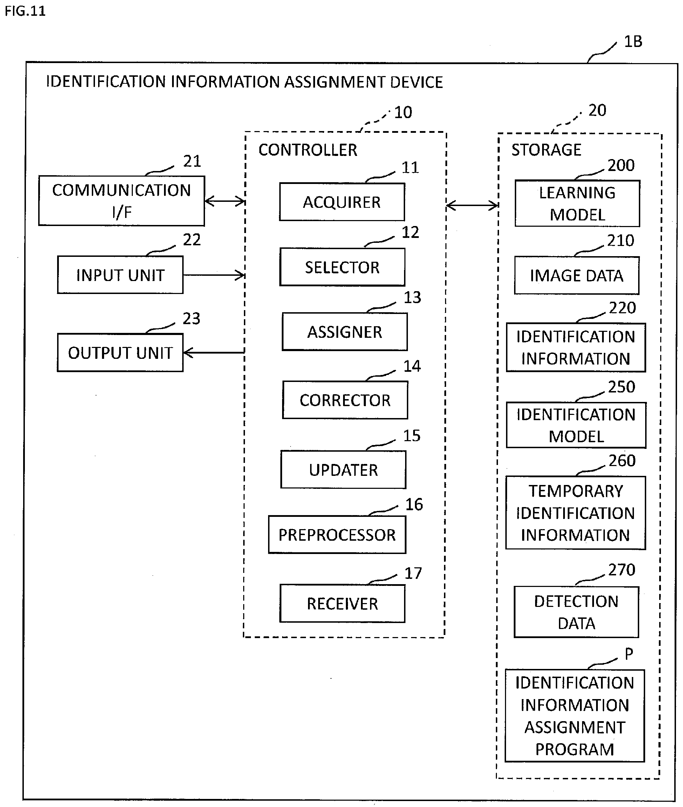

An identification information assignment device 1B according to a third embodiment will be described with reference to Fig. 11. The identification information assignment device 1B selects the image data 211 for the first annotation using the temporary identification information 260 temporarily assigned using the identification model 250 as an existing learning model and detection data 270 detected by the sensor 3. Hereinafter, the identification information assignment device 1B according to the third embodiment is different from the identification information assignment device 1 described above with reference to Fig. 2 in that the identification information assignment device 1B includes the preprocessor 16 and a receiver 17, and stores the identification model 250, the temporary identification information 260, and the detection data 270 in the storage 20.

As described above in the second embodiment, the preprocessor 16 assigns the temporary identification information 260 to all the image data 210 in advance using the identification model 250.

The receiver 17 is installed in a space as a target of the flow line analysis, and receives the detection data 270 of the dynamic body detected by sensor 3 that detects a dynamic body. Specifically, the detection data 270 is sensor value data processed by the sensor value processing device 4. The detection data 270 can specify the position of a dynamic body in the target space.

The receiver 17 stores the received detection data 270 in the storage 20. At this time, the receiver 17 stores the detection data 270 in the storage 20 in association with detection time information or the image data 210 in which detection time by the sensor 3 corresponds to capturing time. The coordinates of the position of the dynamic body in the image data 210 can be specified using the information specified by the detection data 270. Here, it is assumed that detection accuracy of the sensor 3 is high, and thus the position of the dynamic body that can be specified from the detection data 270 is highly reliable.

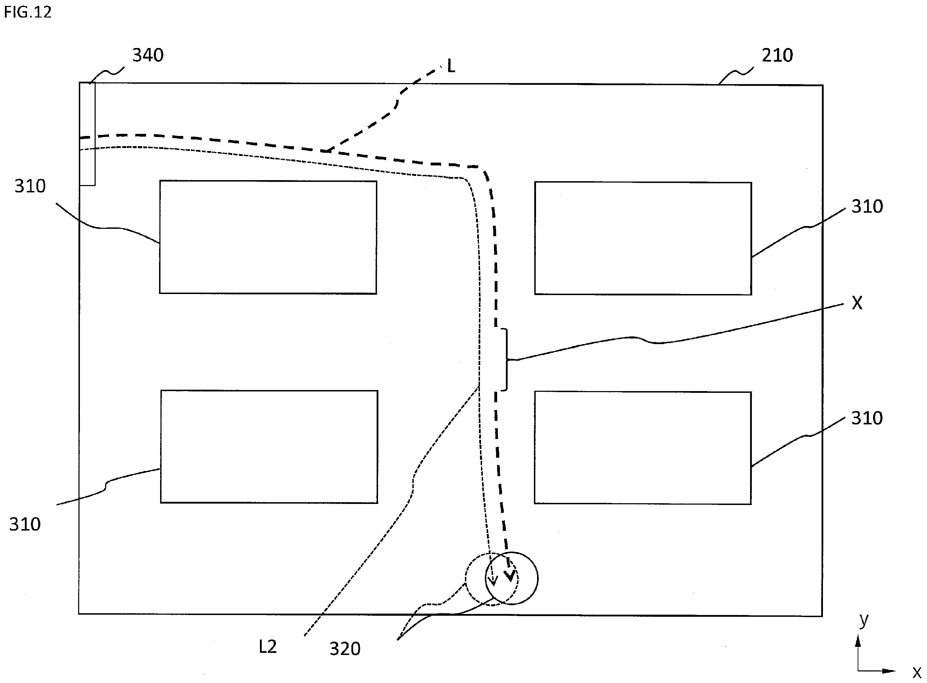

The selector 12 selects the image data 210 in which the position specified by the temporary identification information 260 of the image data 210 is different from the position specified by the detection data 270 as the image data 211 for the first annotation. As described above, the image data 210 and the detection data 270 are stored in the storage 20 such that acquisition times thereof correspond to each other. Accordingly, the position of the dynamic body specified from the corresponding image data 210 and the position of the dynamic body specified by the detection data 270 should match, if accurate. As a result, for example, as illustrated in Fig. 12, the image data 210 in a range X in which the position specified by the detection data 270 does not match the position specified by the temporary identification information 260 is selected as the image data 211 for the first annotation, for example, in a case where the flow line L specified by the temporary identification information 260 is interrupted although a flow line L2 specified by the detection data 270 continues. The image data 210 in such a range is an example in which a dynamic body as an identification target cannot be identified, and by using such image data as learning data, effective learning that enables identification of a dynamic body that is difficult to identify can be performed, and the learning model 200 with high identification accuracy can be generated.

For example, the selector 12 may set different index values for the image data 210 depending on whether the position specified by the temporary identification information 260 and the position specified by the detection data 270 match, and select the image data 211 for the first annotation in accordance with the set index value.

In the plurality of pieces of image data 210 constituting the moving image data, it is considered that a period in which the position specified by the temporary identification information 260 identified from the image data 210 and the position specified by the detection data 270 do not match may continue for a certain period. Thus, when all the pieces of continuous image data 210 are selected, all the pieces of image data 210 in a certain period are selected, and the number of pieces of similar image data 211 for the first annotation increases. It is therefore necessary to prevent all the continuous image data 210 from being selected. For example, in a case where the selector 12 selects the image data 210 as the image data for the first annotation, the selector does not set the image data 210 of the subsequent predetermined period as the selection target. This can prevent the selector 12 from selecting a plurality of pieces of similar image data 210.

### <Processing of assigning identification information and updating learning model>

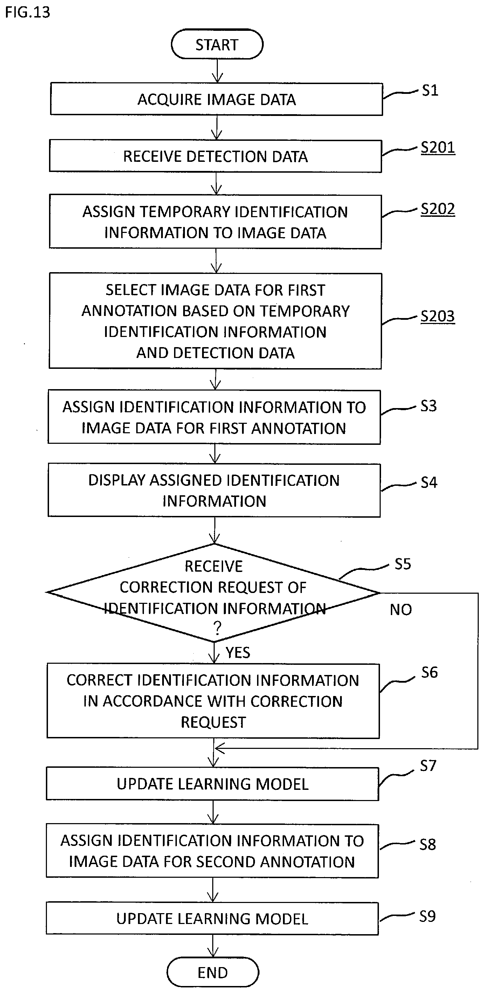

A series of processing of assignment of the identification information performed by the identification information assignment device 1B and the subsequent update of the learning model will be described with reference to Fig. 13. Here, the same processing as the processing described above with reference to Fig. 6 is denoted by the same processing number, and will not be described. Note that, in a flowchart in Fig. 13, processing numbers for processing different from the flowchart in Fig. 6 are underlined.

The receiver 17 receives the detection data 270 from the sensor 3 (S201). At this time, the receiver 17 stores the detection data 270 in association with the corresponding image data 210 in the storage 20.

The preprocessor 16 assigns the temporary identification information 260 to each piece of image data 210 acquired by the acquirer 11 in step S1 by using the identification model 250 (S202). At this time, the preprocessor 16 stores the temporary identification information 260 in association with the corresponding image data 210 in the storage 20.

The selector 12 selects the image data 211 for the first annotation depending on whether the position of the dynamic body specified by the temporary identification information 260 stored in the storage 20 matches the position of the dynamic body specified by the detection data 270 (S203).

In the subsequent processing, similarly to the case described above with reference to Fig. 6, the identification information is assigned to the image data 211 for the first annotation selected in step S203 using the learning model 200 (S3), and the processing in steps S4 to S9 is executed.

As described above, the identification information assignment device 1B determines the appropriateness or inappropriateness of the temporary identification information 260 temporarily assigned using the detection data 270 from the plurality of pieces of continuous image data 210 obtained by capturing the space as a target of the flow line analysis, and selects the image data 212 for the second annotation using a determination result. As a result, the identification information assignment device 1B can select the image data 210 to which the identification information 220 is difficult to automatically assign as the image data 211 for the first annotation. Therefore, the identification information assignment device 1B uses, as learning data, the image data 210 in which a dynamic body as the identification target is difficult to identify, enables efficient learning, and can generate the useful learning model 200.

### <Fourth embodiment>

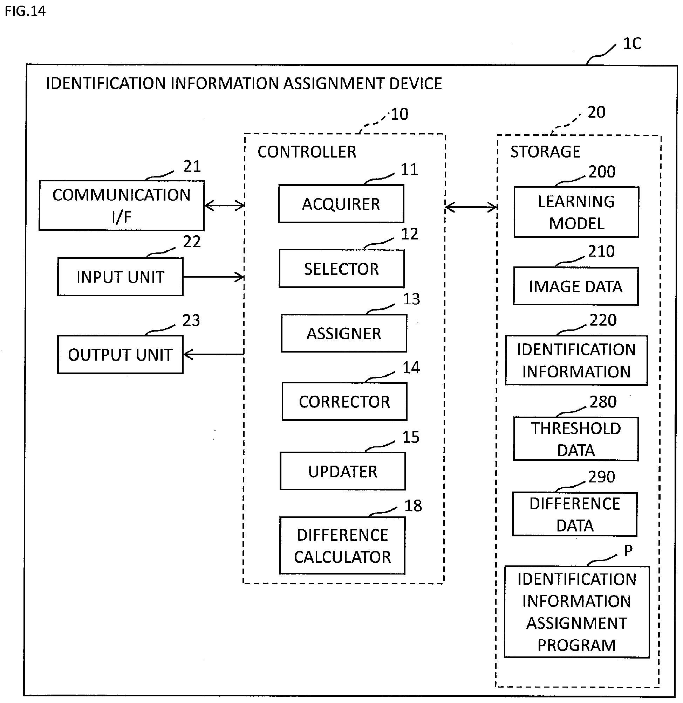

An identification information assignment device 1C according to a fourth embodiment will be described with reference to Fig. 14. The identification information assignment device 1B selects the image data 211 for the first annotation using a difference of the continuous image data 210. Therefore, the identification information assignment device 1C according to the fourth embodiment is different from the identification information assignment device 1 described above with reference to Fig. 2 in that the identification information assignment device 1C includes a difference calculator 18 and stores threshold data 280 and difference data 290 in the storage 20.

For all the plurality of pieces of image data 210, the difference calculator 18 obtains a difference between the first image data 210 and the second image data 210 that is the image data 210 captured continuously with the first image data. The difference calculator 18 stores the obtained difference in the storage 20 as the difference data 290 in association with the image data 210 used for calculating the difference.

In a case where the difference obtained by the difference calculator 18 falls within a predetermined range, the selector 12 selects either the first image data 210 or the second image data 210. Specifically, the selector 12 may set a different index value for each piece of image data 210 using the difference as an index value, and select the image data 211 for the first annotation depending on whether the set index value falls within a predetermined range. For example, the predetermined range in which the second image data 210 is selected is the image data 210 useful for being used as learning data.

### (1) Image with small background difference

When a background difference decreases between the pieces of continuous image data 210 due to a small number of dynamic bodies, a small movement of a dynamic body, or the like, erroneous detection is likely to occur. For example, image data obtained for the purpose of the flow line analysis is less likely to change in a background other than a dynamic body to be detected. Examples of the erroneous detection caused in such a situation include an erroneous detection of a part that is other than a target and not a dynamic body, and a failed detection of a dynamic body. The accuracy of the learning model 200 can be improved by performing learning using, as learning data, a large amount of image data 210 in which such erroneous detection is likely to occur. Therefore, in the identification information assignment device 1C, a lower limit threshold of such a background difference is set, and the selector 12 selects such image data 210 when the difference obtained by the difference calculator 18 is smaller than the lower limit threshold.

### (2) Image with large background difference

When the background difference increases between the continuous image data 210 due to, for example, a large number of dynamic bodies or a large movement of a dynamic body, it is difficult to accurately assign identification information. For example, when the number of identification targets increases, multi-class classification may be required, but such multi-class classification is complicated, and thus learning is also difficult. The accuracy of the learning model 200 can be improved by performing learning using, as learning data, a large amount of image data 210 in which such erroneous detection is likely to occur and the background difference making learning difficult is large. Therefore, in the identification information assignment device 1C, an upper limit threshold of such a background difference is set, and the selector 12 selects such image data 210 when the difference obtained by the difference calculator is larger than the upper limit threshold.

In the plurality of pieces of image data constituting the moving image data, an image having a small background difference is considered to continue for a certain period. Similarly, in the moving image data, an image having a large background difference is considered to continue for a certain period. Thus, when all the pieces of continuous image data 210 are selected in a case where the difference obtained by the difference calculator 18 is smaller than the lower threshold and larger than the upper threshold, all the pieces of image data 210 in a certain period are selected, and the number of pieces of similar image data 211 for the first annotation increases. It is therefore necessary to prevent all the continuous image data 210 from being selected. For example, in a case where the selector 12 selects the image data 210 as the image data for the first annotation, the selector does not set the image data 210 of the subsequent predetermined period as the selection target. This can prevent the selector 12 from selecting a plurality of pieces of similar image data 210.

The threshold data 280 is for specifying the image data 210 in which an error such as an error in assignment of the identification information 220 is likely to occur. Therefore, by using the image data 210 detected using the threshold data 280 as learning data, it is possible to generate the learning model 200 with high identification accuracy that can prevent an error in assignment of the identification information.

### <Processing of assigning identification information and updating learning model>

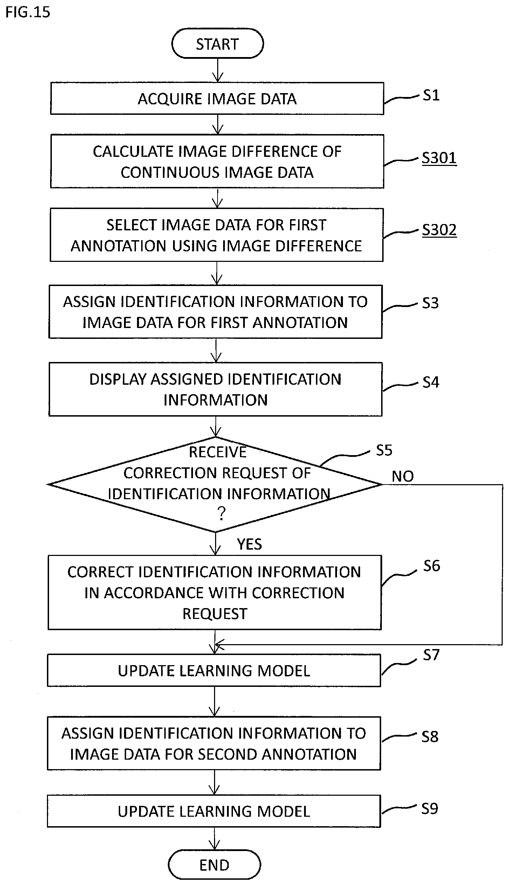

A series of processing of assignment of the identification information 220 performed by the identification information assignment device 1C and the subsequent update of the learning model 200 will be described with reference to Fig. 15. Here, the same processing as the processing described above with reference to Fig. 6 is denoted by the same processing number, and will not be described. Note that, in a flowchart in Fig. 15, processing numbers for processing different from the flowchart in Fig. 6 are underlined.

The difference calculator 18 calculates an image difference of each piece of continuous image data (S301). At this time, the difference calculator 18 stores the obtained difference in the storage 20 as the difference data 290 in association with the image data 210 used for calculating the difference.

The selector 12 compares the threshold data 280 stored in the storage 20 with the difference obtained in step S301, and selects the image data 211 for the first annotation (S302).

In the subsequent processing, similarly to the case described above with reference to Fig. 15, the identification information is assigned to the image data 211 for the first annotation selected in step S203 using the learning model 200 (S3), and the processing in steps S4 to S9 is executed.

As described above, the identification information assignment device 1C from the plurality of pieces of continuous image data 210 obtained by capturing the space as a target of the flow line analysis, selects the image data 211 for the first annotation using the difference between the pieces of continuous image data 210. As a result, the identification information assignment device 1C can select the image data 210 that is efficient for learning as the image data 211 for the first annotation. Therefore, the identification information assignment device 1C enables selection of useful learning data, enables efficient learning, and can generate the useful learning model 200.

### [Effects and additions]

As described above, the embodiments have been described as examples of the technique disclosed in the present application. However, the technique in the present disclosure is not limited to the embodiments, and is also applicable to the embodiments in which changes, replacements, additions, omissions, or the like are appropriately made. Therefore, other embodiments will be exemplified below.

### <<Outline of embodiments>>

(1) An identification information assignment device according to the present disclosure includes an acquirer configured to acquire a plurality of pieces of continuous image data, a selector configured to obtain an index value for the plurality of pieces of image data and select a part of all the pieces of image data as learning data by using the index value, an assigner configured to assign identification information to the image data selected by the selector by using a learning model after learning a relationship between the plurality of pieces of image data and identification information included in each piece of the image data, and an updater configured to update the learning model using the image data to which the identification information is assigned by the assigner, in which the assigner assigns identification information to a rest of the image data acquired by the acquirer using the learning model that has been updated.
   This allows image data effective for learning to be selected from the plurality of pieces of image data as learning data and enables efficient learning.
(2) The identification information assignment device according to (1) further includes a corrector configured to display the image data and the identification information assigned to the image data by the assigner on a display, accept a request for correcting the identification information, and correct the identification information in accordance with the request, in which the updater updates the learning model using the image data in which the identification information is corrected by the corrector.
   It is therefore possible to generate a learning model by correcting the identification information assigned to a part of the image data selected as learning data from the image data and to assign effective identification information to other image data.
(3) In the identification information assignment device according to (1) and (2), the selector assigns random values to the plurality of pieces of image data as index values, and selects learning data in descending order or ascending order of the index values.
   This allows different image data to be selected as learning data in a balanced manner and enables efficient learning.
(4) The identification information assignment device according to (1) or (2) may further include a preprocessor configured to assign temporary identification information as identification information for temporary use to all the plurality of pieces of image data in advance by using an existing identification model, in which the selector may set an index value according to whether the temporary identification information assigned by the preprocessor satisfies a predetermined condition, and select image data to be used as learning data by using the index value.
   This allows image data to which the identification information is difficult to automatically assign to be selected as learning data and enables efficient - learning.
(5) Another identification information assignment device according to the present disclosure includes an acquirer configured to acquire a plurality of pieces of continuous image data, a selector configured to select a part of all the pieces of image data as learning data from the plurality of pieces of image data, an assigner configured to assign identification information to the image data selected by the selector by using a learning model after learning a relationship between the plurality of pieces of image data and identification information included in each piece of the image data, and an updater configured to update the learning model using the image data to which the identification information is assigned by the assigner, in which the assigner assigns identification information to a rest of the image data acquired by the acquirer using the learning model that has been updated.
   This allows image data effective for learning to be selected from the plurality of pieces of image data as learning data and enables efficient learning.
(6) The identification information assignment device of (5) further includes a corrector configured to display the image data and the identification information assigned to the image data by the assigner on a display, accept a request for correcting the identification information, and correct the identification information in accordance with the request, in which the updater may update the learning model using the image data in which the identification information is corrected by the corrector.
   It is therefore possible to generate a learning model by correcting the identification information assigned to a part of the image data selected as learning data from the image data and to assign effective identification information to other image data.
(7) In the identification information assignment device according to (5) or (6), the selector may randomly select image data to be used as learning data from the plurality of pieces of image data.
   This allows different image data to be selected as learning data in a balanced manner and enables efficient learning.
(8) The identification information assignment device according to (5) or (6) may further include a preprocessor configured to assign temporary identification information as identification information for temporary use to all the plurality of pieces of image data in advance by using an existing identification model, in which the selector may select the image data as learning data when the temporary identification information assigned by the preprocessor satisfies a predetermined condition.
   This allows image data to which the identification information is difficult to automatically assign to be selected as learning data and enables efficient learning.
(9) In the identification information assignment device according to (4) or (8), the image data may be image data captured in a predetermined space, the identification information may include information for identifying a dynamic body moving in the space and position information in the space, and the selector may select, as learning data, image data in which position information specified by the temporary identification information obtained by the preprocessor satisfies a condition determined as inappropriate in accordance with layout information of the space.
   This allows image data to which the identification information is difficult to automatically assign to be selected as learning data and enables efficient learning.
(10) In the identification information assignment device according to (4) or (8), the image data may be image data captured in a predetermined space, the identification information may include information for identifying a dynamic body moving in the space and position information in the space, and the selector may select, as learning data, image data in which position information specified by the temporary identification information obtained by the preprocessor is different from position information of the dynamic body specified by detection data of the dynamic body detected by a sensor detecting the dynamic body in the space.
   This allows image data to which the identification information is difficult to automatically assign to be selected as learning data and enables efficient learning.
(11) The identification information assignment device according to (1), (2), (5), or (8) may further include a difference calculator configured to obtain a difference between first image data and second image data that is image data captured continuously with the first image for all the plurality of pieces of image data, in which the selector may use the difference obtained by the difference calculator as an index value and may select the first image data or the second image data as learning data when the index value falls within a predetermined range.
   This allows image data efficient for learning to be selected as learning data and enables efficient learning.
(12) An image processing method according to the present disclosure includes acquiring a plurality of pieces of continuous image data, obtaining an index value for the plurality of pieces of image data and selecting a part of all the pieces of image data as learning data by using the index value, assigning identification information to the image data that has been selected, by using a learning model after learning a relationship between the plurality of pieces of image data and identification information included in each piece of the image data, updating the learning model using the image data to which the identification information is assigned, and assigning the identification information to a rest of the image data that has been acquired, by using the learning model that has been updated.
   As a result, it is possible to assign the identification information using the existing learning model from the acquired image data and generate the target learning model by updating the learning model. This eliminates the need for the operator to manually assign the identification information, and makes it possible to simplify the task of assigning the identification information and improve the accuracy of the identification information to be assigned.
(13) A program of the present disclosure causes a computer to perform the method of (12).

As a result, it is possible to assign the identification information using the existing learning model from the acquired image data and generate the target learning model by updating the learning model. This eliminates the need for the operator to manually assign the identification information, and makes it possible to simplify the task of assigning the identification information and improve the accuracy of the identification information to be assigned.

The identification information assignment device and the identification information assignment method described in all the claims of the present disclosure are implemented in coordination with hardware resources (for example, a processor, a memory, and a program).

### INDUSTRIAL APPLICABILITY

The identification information assignment device and the identification information assignment method of the present disclosure are useful for creating teacher data of machine learning.

### EXPLANATIONS OF LETTERS OR NUMERALS

- 1, 1A, 1B, 1C: Identification information assignment device
- 10: Controller
- 11: Acquirer
- 12: Selector
- 13: Assigner
- 14: Corrector
- 15: Updater
- 16: Preprocessor
- 17: Receiver
- 18: Difference calculator
- 20: Storage
- 200: Learning model
- 210: Image data
- 211: Image data for first annotation
- 212: Image data for second annotation
- 220: Identification information
- 230: Layout information
- 240: Condition data
- 250: Identification model
- 260: Temporary identification information
- 270: Detection data
- 280: Threshold data
- 290: Difference data
- P: Identification information assignment program
- 21: Communication I/F
- 22: Input unit
- 23: Output unit (display)

## Claims

1. An identification information assignment device (1A, 1B) comprising:
an acquirer (11) configured to acquire a plurality of pieces of continuous image data (210);
a selector (12) configured to select a part of all the pieces of image data (210) as learning data from the plurality of pieces of image data (210);
an assigner (14) configured to assign identification information (220) to the image data (210) selected by the selector by using a learning model (200) after learning a relationship between the plurality of pieces of image data (210) and identification information included in each piece of the image data (210);
an updater (15) configured to update the learning model (200) by using the selected image data (210) to which the identification information (220) is assigned by the assigner (14), and
a preprocessor (16) configured to assign temporary identification information (260) as identification information (220) for temporary use to all the plurality of pieces of image data (210) in advance by using an existing identification model (200),
wherein the assigner assigns identification information (220) to a rest of the image data (210) acquired by the acquirer using the learning model that has been updated
wherein the selector (12) selects the image data (210) as learning data when the temporary identification information (260) assigned by the preprocessor (16) satisfies a predetermined condition.

2. The identification information assignment device (1A, 1B) according to claim 1, further comprising a corrector (14) configured to display the image data (210) and the identification information assigned to the image data by the assigner (14) on a display (23), accept a request for correcting the identification information (220), and correct the identification information (220) in accordance with the request,
wherein the updater (15) updates the learning model (200) using the image data (210) in which the identification information (220) is corrected by the corrector.

3. The identification information assignment device (1A, 1B) according to claim 1 or 2, wherein the selector (12) randomly selects image data (210) to be used as learning data from the plurality of pieces of image data (210).

4. The identification information assignment device (1A, 1B) according to claim 1,
wherein the image data (210) is image data (210) captured in a predetermined space,
the identification information (220) includes information for identifying a dynamic body moving in the space and position information in the space, and
the selector (12) selects, as learning data, image data (210) in which position information specified by the temporary identification information (260) obtained by the preprocessor (16) satisfies a condition determined as inappropriate in accordance with layout information (230) of the space.

5. The identification information assignment device (1B) according to claim 1,
wherein the image data (210) is image data (210) captured in a predetermined space,
the identification information (220) includes information for identifying a dynamic body moving in the space and position information in the space, and
the selector (12) selects, as learning data, image data (210) in which position information specified by the temporary identification information (260) obtained by the preprocessor (16) is different from position information of the dynamic body specified by detection data (270) of the dynamic body detected by a sensor (3) detecting the dynamic body in the space.

6. The identification information assignment device (1C) according to claim 1, further comprising a difference calculator (18) configured to obtain a difference (290) between first image data (211) and second image data (212) that is image data (210) captured continuously with the first image for all the plurality of pieces of image data (210),
wherein the selector (12) uses the difference (290) obtained by the difference calculator (18) as an index value and selects the first image data (211) or the second image data (212) as learning data when the index value falls within a predetermined range.

7. An identification information assignment method comprising steps of:
acquiring (S1) a plurality of pieces of continuous image data (210);
obtaining an index value for the plurality of pieces of image data and selecting (S2, S102, S203, S302) a part of all the pieces of image data (210) as learning data by using the index value;
assigning (S3) identification information (220) to the image data (210) that has been selected, by using a learning model (200) after learning a relationship between the plurality of pieces of image data (210) and identification information included in each piece of the image data (210);
updating (S7) the learning model (200) using the image data (210) to which the identification information (220) has been assigned; and
assigning the identification information (220) to a rest of the image data (210) that has been acquired, by using the learning model (200)that has been updated;
assigning (S101, S202) temporary identification information (260) as identification information (220) for temporary use to all the plurality of pieces of image data (210) in advance by using an existing identification model; and
selecting (S102, S203) the image data (210) as learning data, when the assigned temporary identification information (260) satisfies a predetermined condition.

8. A program (P) that causes a computer (1) to perform the method described in claim 7.

## Patentansprüche

1. Identifikationsinformationszuweisungsvorrichtung (1A, 1B), mit:
einer Erfassungseinheit (11), ausgestaltet zum Erfassen mehrerer Stücke fortlaufender Bilddaten (210);
einer Auswahleinheit (12), ausgestaltet zum Auswählen eines Teils aller Bilddatenstücke (210) als Lerndaten aus mehreren Bilddatenstücken (210);
einer Zuweisungseinheit (14), ausgestaltet zum Zuweisen von Identifikationsinformationen (220) zu den von der Auswahleinheit ausgewählten Bilddaten (210) unter Verwendung eines Lernmodells (200) nach einem Lernen einer Beziehung zwischen den mehreren Bilddatenstücken (210) und in jedem Stück der Bilddaten (210) enthaltenen Identifikationsinformationen;
einer Aktualisierungseinheit (15), ausgestaltet zum Aktualisieren des Lernmodells (200) unter Verwendung der ausgewählten Bilddaten (210), denen die Identifikationsinformationen (220) durch die Zuweisungseinheit (14) zugewiesen sind, und
einer Vorverarbeitungseinheit (16), ausgestaltet zum Zuweisen von temporären Identifikationsinformationen (260) als Identifikationsinformationen (220) zur vorübergehenden Verwendung zu allen der mehreren Bilddatenstücke (210) im Voraus unter Verwendung eines bestehenden Identifikationsmodells (200),
wobei die Zuweisungseinheit Identifikationsinformationen (220) den restlichen Bilddaten (210), die von der Erfassungseinheit erfasst wurden, unter Verwendung des aktualisierten Lernmodells zuweist,
wobei die Auswahleinheit (12) die Bilddaten (210) als Lerndaten auswählt, wenn die von der Vorverarbeitungseinheit (16) zugewiesenen temporären Identifikationsinformationen (260) eine vorbestimmte Bedingung erfüllen.

2. Identifikationsinformationszuweisungsvorrichtung (1A, 1B) nach Anspruch 1, ferner mit einer Korrektureinheit (14), ausgestaltet zum Anzeigen der Bilddaten (210) und der den Bilddaten durch die Zuweisungseinheit (14) zugewiesenen Identifikationsinformationen auf einer Anzeige (23), Annehmen einer Anforderung zum Korrigieren der Identifikationsinformationen (220) und Korrigieren der Identifikationsinformationen (220) entsprechend der Anforderung,
wobei die Aktualisierungseinheit (15) das Lernmodell (200) unter Verwendung der Bilddaten (210) aktualisiert, in denen die Identifikationsinformationen (220) durch die Korrektureinheit korrigiert sind.

3. Identifikationsinformationszuweisungsvorrichtung (1A, 1B) nach Anspruch 1 oder 2, wobei die Auswahleinheit (12) zufällig Bilddaten (210), die als Lerndaten zu verwenden sind, aus den mehreren Bilddatenstücken (210) auswählt.

4. Identifikationsinformationszuweisungsvorrichtung (1A, 1B) nach Anspruch 1, wobei die Bilddaten (210) in einem vorbestimmten Raum aufgenommene Bilddaten (210) sind,
die Identifikationsinformationen (220) Informationen zum Identifizieren eines sich in dem Raum bewegenden dynamischen Körpers und Positionsinformationen in dem Raum enthalten, und
die Auswahleinheit (12) als Lerndaten Bilddaten (210) auswählt, in denen durch die von der Vorverarbeitungseinheit (16) erhaltenen temporären Identifikationsinformationen (260) spezifizierte Positionsinformationen eine Bedingung erfüllen, die entsprechend Layoutinformationen (230) des Raums als ungeeignet ermittelt ist.

5. Identifikationsinformationszuweisungsvorrichtung (1B) nach Anspruch 1, wobei die Bilddaten (210) in einem vorbestimmten Raum aufgenommene Bilddaten (210) sind,
die Identifikationsinformationen (220) Informationen zum Identifizieren eines sich in dem Raum bewegenden dynamischen Körpers und Positionsinformationen in dem Raum enthalten, und
die Auswahleinheit (12) als Lerndaten Bilddaten (210) auswählt, in denen durch die von der Vorverarbeitungseinheit (16) erhaltenen temporären Identifikationsinformationen (260) spezifizierte Positionsinformationen sich von Positionsinformationen des dynamischen Körpers unterscheiden, die durch Erfassungsdaten (270) des dynamischen Körpers spezifiziert sind, der durch einen Sensor (3) erfasst wird, der den dynamischen Körper in dem Raum erfasst.

6. Identifikationsinformationszuweisungsvorrichtung (1C) nach Anspruch 1, ferner mit einer Differenzberechnungseinheit (18), ausgestaltet zum Erhalten einer Differenz (290) zwischen ersten Bilddaten (211) und zweiten Bilddaten (212), die mit dem ersten Bild fortlaufend aufgenommene Bilddaten (210) sind, für alle der mehreren Bilddatenstücke (210),
wobei die Auswahleinheit (12) die durch die Differenzberechnungseinheit (18) erhaltene Differenz (290) als Indexwert verwendet und die ersten Bilddaten (211) oder die zweiten Bilddaten (212) als Lerndaten auswählt, wenn der Indexwert in einen vorbestimmten Bereich fällt.

7. Identifikationsinformationszuweisungsverfahren, mit den Schritten:
Erfassen (S1) mehrerer Stücke fortlaufende Bilddaten (210);
Erhalten eines Indexwerts für die mehreren Bilddatenstücke und Auswählen (S2, S102, S203, S302) eines Teils aller Bilddatenstücke (210) als Lerndaten unter Verwendung des Indexwerts;
Zuweisen (S3) von Identifikationsinformationen (220) zu den Bilddaten (210), die ausgewählt worden sind, unter Verwendung eines Lernmodells (200) nach dem Lernen einer Beziehung zwischen den mehreren Bilddatenstücken (210) und in jedem Stück der Bilddaten (210) enthaltenen Identifikationsinformationen;
Aktualisieren (S7) des Lernmodells (200) unter Verwendung der Bilddaten (210), denen die Identifikationsinformationen (220) zugewiesen worden sind; und
Zuweisen der Identifikationsinformationen (220) zu den restlichen Bilddaten (210), die erfasst worden sind, unter Verwendung des aktualisierten Lernmodells (200);
Zuweisen (S101, S202) von temporären Identifikationsinformationen (260) als Identifikationsinformationen (220) zur vorübergehenden Verwendung zu allen der mehreren Bilddatenstücke (210) im Voraus unter Verwendung eines bestehenden Identifikationsmodells; und
Auswählen (S102, S203) der Bilddaten (210) als Lerndaten, wenn die zugewiesenen temporären Identifikationsinformationen (260) eine vorbestimmte Bedingung erfüllen.

8. Programm (P), das einen Computer (1) veranlasst, das in Anspruch 7 beschriebene Verfahren durchzuführen.

## Revendications

1. Dispositif d'attribution d'informations d'identification (1A, 1B) comprenant :
une unité d'acquisition (11) configurée pour acquérir une pluralité d'éléments de données d'image continues (210) ;
une unité de sélection (12) configurée pour sélectionner une partie de tous les éléments de données d'image (210) en tant que données d'apprentissage parmi la pluralité d'éléments de données d'image (210) ;
une unité d'attribution (14) configurée pour attribuer des informations d'identification (220) aux données d'image (210) sélectionnées par l'unité de sélection en utilisant un modèle d'apprentissage (200) après apprentissage d'une relation entre la pluralité d'éléments de données d'image (210) et des informations d'identification incluses dans chaque élément des données d'image (210) ;
une unité de mise à jour (15) configurée pour mettre à jour le modèle d'apprentissage (200) en utilisant les données d'image (210) sélectionnées auxquelles les informations d'identification (220) sont attribuées par l'unité d'attribution (14) , et
une unité de prétraitement (16) configurée pour attribuer des informations d'identification temporaires (260) en tant qu'informations d'identification (220) à usage temporaire à la totalité de la pluralité d'éléments de données d'image (210) au préalable en utilisant un modèle d'identification existant (200) ,
dans lequel l'unité d'attribution attribue des informations d'identification (220) à un reste des données d'image (210) acquises par l'unité d'acquisition en utilisant le modèle d'apprentissage qui a été mis à jour ,
dans lequel l'unité de sélection (12) sélectionne les données d'image (210) en tant que données d'apprentissage lorsque les informations d'identification temporaires (260) attribuées par l'unité de prétraitement (16) satisfont à une condition prédéterminée .

2. Dispositif d'attribution d'informations d'identification (1A, 1B) selon la revendication 1, comprenant en outre une unité de correction (14) configurée pour afficher les données d'image (210) et les informations d'identification attribuées aux données d'image par l'unité d'attribution (14) sur un écran d'affichage (23), accepter une demande de correction des informations d'identification (220), et corriger les informations d'identification (220) conformément à la demande,
dans lequel l'unité de mise à jour (15) met à jour le modèle d'apprentissage (200) en utilisant les données d'image (210) dans lesquelles les informations d'identification (220) sont corrigées par l'unité de correction .

3. Dispositif d'attribution d'informations d'identification (1A, 1B) selon la revendication 1 ou 2, dans lequel l'unité de sélection (12) sélectionne de manière aléatoire des données d'image (210) à utiliser en tant que données d'apprentissage parmi la pluralité d'éléments de données d'image (210) .

4. Dispositif d'attribution d'informations d'identification (1A, 1B) selon la revendication 1, dans lequel les données d'image (210) sont des données d'image (210) capturées dans un espace prédéterminé,
les informations d'identification (220) incluent des informations pour identifier un corps dynamique se déplaçant dans l'espace et des informations de position dans l'espace, et
l'unité de sélection (12) sélectionne, en tant que données d'apprentissage, des données d'image (210) dans lesquelles des informations de position spécifiées par les informations d'identification temporaires (260) obtenues par l'unité de prétraitement (16) satisfont à une condition déterminée comme inappropriée conformément à des informations de disposition (230) de l'espace .

5. Dispositif d'attribution d'informations d'identification (1B) selon la revendication 1, dans lequel les données d'image (210) sont des données d'image (210) capturées dans un espace prédéterminé,
les informations d'identification (220) incluent des informations pour identifier un corps dynamique se déplaçant dans l'espace et des informations de position dans l'espace, et
l'unité de sélection (12) sélectionne, en tant que données d'apprentissage, des données d'image (210) dans lesquelles des informations de position spécifiées par les informations d'identification temporaires (260) obtenues par l'unité de prétraitement (16) sont différentes d'informations de position du corps dynamique spécifiées par des données de détection (270) du corps dynamique détecté par un capteur (3) détectant le corps dynamique dans l'espace .

6. Dispositif d'attribution d'informations d'identification (1C) selon la revendication 1, comprenant en outre une unité de calcul de différence (18) configurée pour obtenir une différence (290) entre des premières données d'image (211) et des secondes données d'image (212) qui sont des données d'image (210) capturées de manière continue avec la première image pour la totalité de la pluralité d'éléments de données d'image (210),
dans lequel l'unité de sélection (12) utilise la différence (290) obtenue par l'unité de calcul de différence (18) en tant que valeur d'indice et sélectionne les premières données d'image (211) ou les secondes données d'image (212) en tant que données d'apprentissage lorsque la valeur d'indice se situe dans une plage prédéterminée .

7. Procédé d'attribution d'informations d'identification comprenant les étapes consistant à :
acquérir (S1) une pluralité d'éléments de données d'image continues (210) ;obtenir une valeur d'indice pour la pluralité d'éléments de données d'image et sélectionner (S2, S102, S203, S302) une partie de tous les éléments de données d'image (210) en tant que données d'apprentissage en utilisant la valeur d'indice ;
attribuer (S3) des informations d'identification (220) aux données d'image (210) qui ont été sélectionnées, en utilisant un modèle d'apprentissage (200) après apprentissage d'une relation entre la pluralité d'éléments de données d'image (210) et des informations d'identification incluses dans chaque élément des données d'image (210) ;
mettre à jour (S7) le modèle d'apprentissage (200) en utilisant les données d'image (210) auxquelles les informations d'identification (220) ont été attribuées ; et
attribuer les informations d'identification (220) à un reste des données d'image (210) qui ont été acquises, en utilisant le modèle d'apprentissage (200) qui a été mis à jour ;
attribuer (S101, S202) des informations d'identification temporaires (260) en tant qu'informations d'identification (220) à usage temporaire à la totalité de la pluralité d'éléments de données d'image (210) au préalable en utilisant un modèle d'identification existant ; et
sélectionner (S102, S203) les données d'image (210) en tant que données d'apprentissage, lorsque les informations d'identification temporaires (260) attribuées satisfont à une condition prédéterminée.

8. Programme (P) qui amène un ordinateur (1) à exécuter le procédé décrit dans la revendication 7.
